# EUROPEAN PATENT APPLICATION

(11) **EP 4 778 605 A1**
(43) Date of publication of application: **22.07.2026**
(21) Application number: 24865079.8
(22) Date of filing: 24.07.2024
(51) Int. Cl.: A63F 13/57, A63F 13/52, A63F 13/53, A63F 13/79, A63F 13/812

(54) **INFORMATION PROCESSING DEVICE, INFORMATION PROCESSING METHOD, AND PROGRAM**

(30) Priority: 15.09.2023 JP 2023149698
(71) Applicant: Sony Group Corporation, Tokyo 108-0075 (JP)
(72) Inventor: MORI, Kosuke, Tokyo 108-0075 (JP); NAKAMURA, Kota, Tokyo 108-0075 (JP); SASAKI, Kyomin, Tokyo 108-0075 (JP)
(74) Representative: D Young & Co LLP
(86) International application number: PCT/JP2024/026397
(87) International publication number: WO 2025/057572

(57) **Abstract**

[Object] The present disclosure is capable of displaying prediction results for intuitive understanding.

[Solving Means] Provided is an information processing device including: a control unit that performs processing to predict a posture of an object after a prescribed time on the basis of game information including at least a motion history of the object operated by a player, and processing to display the predicted posture of the object in a display mode different from that of a current image of the object.

## Description

### Technical Field

The present disclosure relates to an information processing device, an information processing method, and a program.

### Background Art

In recent years, technologies for providing virtual space in which various objects such as 3D models or 2D images are arranged have become known. Users can experience the virtual space using information processing terminals in various forms, such as smartphones, HMDs (head-mounted displays), or PCs. In the virtual space, avatars (e.g., 3D computer graphics presented on the basis of 3D models) that are associated with and operable by the users can be arranged.

Furthermore, servers that control such virtual space are connected with multiple information processing terminals. Each information processing terminal displays, on the basis of information received from the users, images in the virtual space corresponding to each user's view. Here, each avatar's motions in the virtual space are desirably synchronized between the information processing terminals. Patent Literature 1 listed below discloses a technology for facilitating the synchronization of avatars' motions between the information processing terminals.

### Citation List

### Patent Literature

Patent Literature 1: Japanese Patent Application Laid-open No. 2018-196577

### Disclosure of Invention

### Technical Problem

Patent Literature 1 listed above mainly discloses the prediction of hand positions in punching motions and does not disclose a display that allows intuitive understanding of the prediction results.

Therefore, the present disclosure proposes an information processing device, an information processing method, and a program capable of displaying prediction results for intuitive understanding. Solution to Problem

According to the present disclosure, there is provided an information processing device including: a control unit that performs processing to predict a posture of an object after a prescribed time on the basis of game information including at least a motion history of the object operated by a player, and processing to display the predicted posture of the object in a display mode different from that of a current image of the object.

Furthermore, according to the present disclosure, there is provided an information processing method including: predicting, by a processor, a posture of an object after a prescribed time on the basis of game information including at least a motion history of the object operated by a player; and displaying, by the processor, the predicted posture of the object in a display mode different from that of a current image of the object.

Furthermore, according to the present disclosure, there is provided a program causing a computer to function as a control unit that displays a posture of an object after a prescribed time, which is predicted on the basis of game information including at least a motion history of the object operated by a player, in a display mode different from that of a current image of the object.

### Brief Description of Drawings

[Fig. 1] Fig. 1 is a diagram showing the overall configuration of an information processing system 1 according to an embodiment of the present disclosure.
[Fig. 2] Fig. 2 is a block diagram showing an example of the configuration of a server 20 according to this embodiment.
[Fig. 3] Fig. 3 is a block diagram showing an example of the configuration of an observer terminal 30 according to this embodiment.
[Fig. 4] Fig. 4 is a diagram showing a first display example according to this embodiment.
[Fig. 5] Fig. 5 is a diagram showing a second display example according to this embodiment.
[Fig. 6] Fig. 6 is a diagram showing a third display example according to this embodiment.
[Fig. 7] Fig. 7 is a diagram showing a fourth display example according to this embodiment.
[Fig. 8] Fig. 8 is a diagram showing a fifth display example according to this embodiment.
[Fig. 9] Fig. 9 is a flowchart showing the overall flow of the operation processing of the information processing system 1 according to this embodiment.
[Fig. 10] Fig. 10 is a flowchart showing the operation processing of the observer terminal 30 according to this embodiment.
[Fig. 11] Fig. 11 is a flowchart showing the operation processing of displaying the operation prediction result in step S209 shown in Fig. 10.
[Fig. 12] Fig. 12 is a diagram illustrating prediction timings according to a first modified example of this embodiment.

### Mode(s) for Carrying Out the Invention

Hereinafter, preferred embodiments of the present disclosure will be described in detail with reference to the accompanying drawings. Note that in the specification and drawings, components having substantially the same functional configurations are denoted by the same reference numerals, and their redundant descriptions are omitted.

Furthermore, the description will be given in the following order.
1. Configuration
   1-1. System Configuration
   1-2. Configuration of Server 20
   1-3. Configuration of Observer Terminal 30
2. Display Example
   2-1. Basic Display Example of Predicted Results
   2-2. Display Example of Operation Prediction According to The Number of Avatars within Angle of View
   2-3. Display Example of Operation Prediction According to Approaching Notice Avatar
   2-4. Optional Display Control of Operation Prediction
3. Operation Processing
   3-1. Overall Flow
   3-2. Operation Processing of Observer Terminal 30
4. Modified Examples
   4-1. First Modified Example
   4-2. Second Modified Example
   4-3. Third Modified Example
   4-4. Fourth Modified Example
5. Supplemental

### <1. Configuration>

An information processing system according to an embodiment of the present disclosure will be specifically described using the drawings.

### <<1-1. System Configuration>>

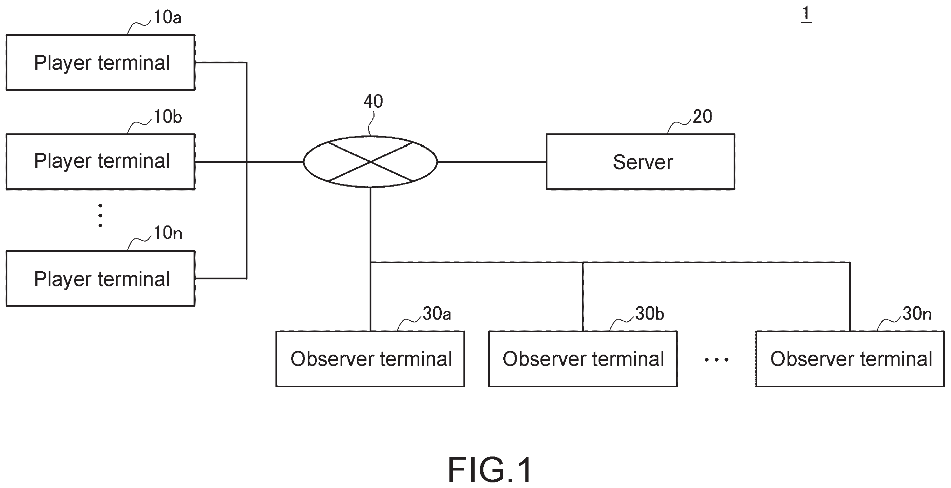

Fig. 1 is a diagram showing the overall configuration of the information processing system 1 according to an embodiment of the present disclosure. The information processing system 1 according to this embodiment includes one or more player terminals 10 (10a to 10n), a server 20 (an example of an information processing device), and observer terminals 30 (30a to 30n) (each being an example of a user terminal).

In this embodiment, a case is assumed in which a sports game, such as soccer, is played in a metaverse (an example of a virtual space) controlled by the server 20. The server 20 reflects operation information, which is transmitted from each player terminal 10 participating in the game, onto each avatar (an example of an object) associated with a corresponding player in the metaverse. The avatar represents, for example, 3DCG displayed on the basis of a 3D model. Furthermore, the server 20 controls the transmission of information for displaying a game image to each observer terminal 30.

The observer terminal 30 represents an information processing terminal (an example of a user terminal) used by an observer to view (observe) a game. The observer terminal 30 is implemented, for example, by a smartphone, a tablet terminal, a PC (Personal Computer), an HMD (Head mounted Display) covering the entire field of view, a glasses-type display device, a projector, or the like. In this specification, the observer includes not only a general viewer of the game, but also an administrator responsible for game distribution, an operator who determines camera work for a distributed image, and the like.

Here, when the sports game played in the metaverse is being viewed by each observer, the server 20 according to this embodiment performs real-time posture prediction for each avatar participating in the game, making it possible to present the predicted results on the image of the sports game being viewed by the observer in such a manner as to be intuitively and easily understood. As a result, for example, an operator who determines camera work for the distributed image can prepare for the next camera work operation. In addition, a general viewer can further enjoy the game by anticipating the next developments.

The overview of the information processing system 1 according to an embodiment of the present disclosure has been described above. Subsequently, the specific configuration of each device included in the information processing system 1 according to this embodiment will be described with reference to the drawings.

### <<1-2. Configuration of Server 20>>

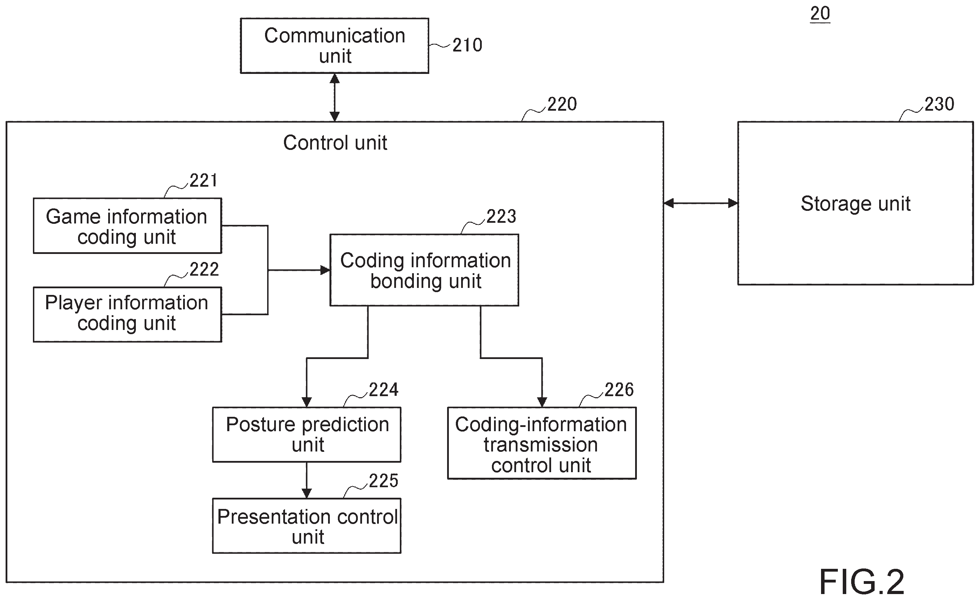

Fig. 2 is a block diagram showing an example of the configuration of the server 20 according to this embodiment. As shown in Fig. 2, the server 20 includes a communication unit 210, a control unit 220, and a storage unit 230.

### (Communication Unit 210)

The communication unit 210 has a transmission unit that transmits data to an external device and a reception unit that receives data from an external device. The communication unit 210 according to this embodiment may communicate with or connect to an external device or the Internet, for example, via a wired or wireless LAN (Local Area Network), Wi-Fi (TM), Bluetooth (TM), a mobile communication network (LTE (Long Term Evolution)), 4G (fourth-generation mobile communication system), 5G (fifth-generation mobile communication system), or the like.

### (Control Unit 220)

The control unit 220 functions as a computation processing unit and a control device and controls overall operations within the server 20 in accordance with various programs. The control unit 220 is implemented, for example, by an electronic circuit such as a CPU (Central Processing Unit) or a microprocessor. Furthermore, the control unit 220 may also include a ROM (Read Only Memory) that stores programs, computation parameters, and the like used therein, and a RAM (Random Access Memory) that temporarily stores parameters and the like, which vary as appropriate.

The control unit 220 according to this embodiment can also function as a game information coding unit 221, a player information coding unit 222, a coding information bonding unit 223, a posture prediction unit 224, a presentation control unit 225, and a coding-information transmission control unit 226.

The game information coding unit 221 codes (an example of feature-amount extraction) game information that is progressing in real time. The game information includes at least a motion history of each avatar (object) operated by a player. The motion history of each avatar is at least one of a posture history of the avatar (specifically, a history of coordinate information regarding joint positions for each frame), or an operation history of a player with respect to the avatar (specifically, a history of operation items for each frame, such as running, passing, shooting, intercepting, and stopping). The game information coding unit 221 codes, for example, operation histories of all players since the start of the game and posture histories of all avatars. Moreover, the game information may also include information such as a history of ball positions, scores, a game time (elapsed game time since the start of a game), and the like. The game information coding unit 221 may code the game information including these information items. A coding method is not particularly limited. However, for example, the game information coding unit 221 may convert the above-described game information into a vector using a trained model that is obtained by machine learning of neural networks or the like.

The player information coding unit 222 codes (an example of feature-amount extraction) player information regarding a player operating each avatar participating in a game. The player information includes at least one of a history of the player's field-of-view images or a sound history in the game. From the history of the player's field-of-view images, motions of other avatars present around an avatar operated by the player can be obtained. The sound history is a history of sounds perceived by the player. From the sound history, for example, speech sounds of other players or cheers from the audience can be obtained. Furthermore, the player information may also include a position (role) or a performance level of the avatar operated by the player in the game. The player information coding unit 222 may code the player information including these information items. A coding method is not particularly limited. However, for example, the player information coding unit 222 may convert the above-described player information into a vector using a trained model that is obtained by machine learning of neural networks or the like.

The coding information bonding unit 223 performs processing to combine information coded by the game information coding unit 221 with information coded by the player information coding unit 222.

The posture prediction unit 224 performs processing to predict an avatar's posture after a prescribed time. For example, the prescribed time may be a few seconds, such as two to five seconds. Examples of postures include a running posture (motion), a passing posture (motion), a shooting posture (motion), an intercepting posture (motion), or a stopping posture (motion). Furthermore, the predicted posture may include a position. That is, the posture prediction unit 224 can predict the position and posture of an avatar after a prescribed time. On the basis of game information that includes at least a motion history of each avatar operated by each player, the posture prediction unit 224 may perform processing to predict the posture of the avatar after a prescribed time. Furthermore, on the basis of player information, the posture prediction unit 224 may also perform processing to predict the posture of an avatar after a prescribed time. In this embodiment, by using player information that includes surrounding information possibly affecting a player's operation decisions, such as motions of nearby avatars or calls from other players, an avatar's irregular motions resulting from surrounding situations can also be predicted. The posture prediction unit 224 can output the posture having the highest prediction probability as a prediction result (also referred to as a posture prediction result).

In this embodiment, the posture prediction unit 224 predicts the posture of each avatar after a prescribed time on the basis of coding information in which the coding information of game information is combined with the coding information of player information.

The posture prediction unit 224 may predict the posture of each avatar after a prescribed time using a trained prediction model obtained by machine learning of neural networks or the like. The posture prediction unit 224 can calculate, as a prediction of an avatar's posture after a prescribed time, the joint positions (coordinate information) of the avatar's entire body after the prescribed time.

More specifically, the posture prediction unit 224 predicts coding information after a prescribed time using a trained prediction model on the basis of coding information in which the coding information of game information is combined with the coding information of player information, and converts the predicted coding information into the joint positions (coordinate information) of the entire body of each avatar using the trained model. Examples of the joint positions include the coordinate positions of the head, neck, shoulders, elbows, wrists, waist, knees, ankles, and toes.

As described above, in this embodiment, the postures of all avatars after a prescribed time can be predicted on the basis of game information and player information. Note that the posture prediction unit 224 may predict the postures of all avatars after a prescribed time on the basis of only game information without using player information. A manager may preset whether to use player information for prediction.

The posture prediction method described above is merely an example, and the present disclosure is not limited to this.

The presentation control unit 225 functions to control the presentation of a prediction result (posture information (coordinate information) of each avatar after a prescribed time) to be presented to an observer. Specifically, the presentation control unit 225 controls the transmission of a prediction result from the communication unit 210 to the observer terminal 30 through the network 40.

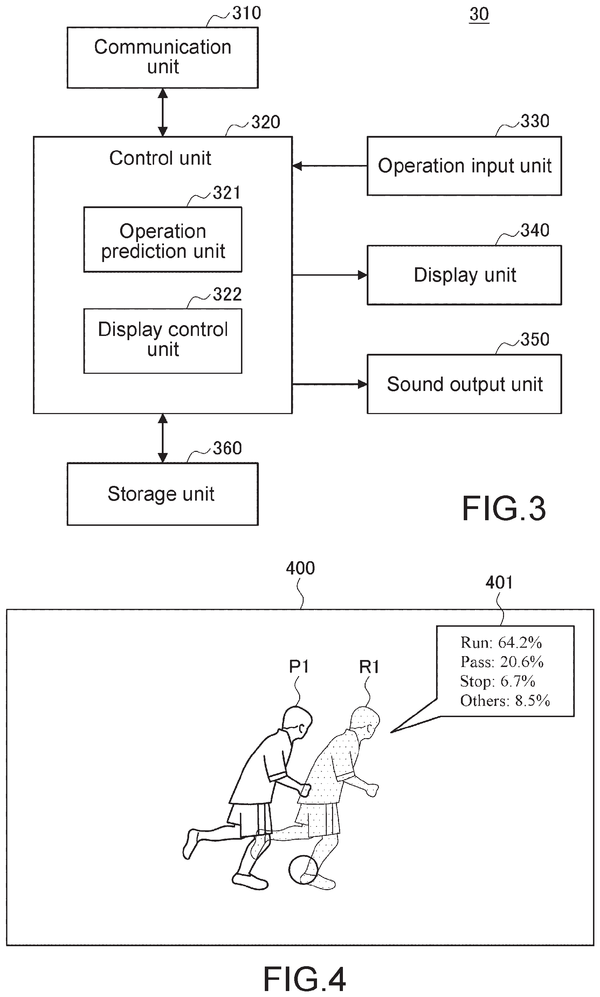

Here, a predicted posture of an avatar can be presented to an observer in a display mode different from that of a current image of the avatar. Display examples will be described later with reference to Figs. 4 to 8. The presentation control unit 225 controls the transmission of information, which is used to display a predicted posture of each avatar in a display mode different from that of a current avatar, to the observer terminal 30 (user terminal).

The coding-information transmission control unit 226 controls the transmission of combined coding information to the observer terminal 30. Such coding information is used for the operation prediction performed in the observer terminal 30.

### (Storage Unit)

The storage unit 230 is implemented by the ROM that stores programs, computation parameters, and the like used in the processing of the control unit 220, and the RAM that temporarily stores parameters and the like, which vary as appropriate.

The configuration of the server 20 has been specifically described above. However, the configuration of the server 20 according to the present disclosure is not limited to the example shown in Fig. 2. For example, the server 20 may not necessarily have all the components shown in Fig. 2. Furthermore, the server 20 may be implemented by a plurality of devices.

### <<1-3. Configuration of Observer Terminal 30>>

Fig. 3 is a block diagram showing an example of the configuration of the observer terminal 30 according to this embodiment. As shown in Fig. 3, the observer terminal 30 includes a communication unit 310, a control unit 320, an operation input unit 330, a display unit 340, a sound output unit 350, and a storage unit 360.

### (Communication Unit 310)

The communication unit 310 has a transmission unit that transmits data to an external device and a reception unit that receives data from an external device. The communication unit 310 according to this embodiment may communicate with or connect to an external device or the Internet, for example, via a wired or wireless LAN (Local Area Network), Wi-Fi (TM), Bluetooth (TM), a mobile communication network (LTE (Long Term Evolution)), 4G (fourth-generation mobile communication system), 5G (fifth-generation mobile communication system), or the like.

### (Control Unit 320)

The control unit 320 functions as a computation processing unit and a control unit and controls overall operations within the observer terminal 30 in accordance with various programs. The control unit 320 is implemented, for example, by an electronic circuit such as a CPU (Central Processing Unit) or a microprocessor. Furthermore, the control unit 320 may also include a ROM (Read Only Memory) that stores programs, computation parameters, and the like used therein and a RAM (Random Access Memory) that temporarily stores parameters and the like, which vary as appropriate.

The control unit 320 according to this embodiment can also function as an operation prediction unit 321 and a display control unit 322.

The operation prediction unit 321 performs processing to predict a player' operation of an avatar after a prescribed time. The operation prediction unit 321 may perform processing to predict a player's operation for an avatar after a prescribed time on the basis of game information, which includes at least a motion history of each avatar operated by each player. Furthermore, the operation prediction unit 321 may perform processing to predict a player's operation for an avatar after a prescribed time on the basis of player information.

In this embodiment, the operation prediction unit 321 predicts each player's operation for an avatar after a prescribed time on the basis of coding information in which the coding information of game information and the coding information of player information transmitted from the server 20 are combined.

The operation prediction unit 321 may predict each player's operation for an avatar after a prescribed time using a trained prediction model obtained by machine learning of neural networks or the like. The operation prediction unit 321 outputs operation items, such as running, passing, and stopping, as a prediction of each player's operation for an avatar after a prescribed time. Note that the output operation items are accompanied by prediction probabilities.

More specifically, the operation prediction unit 321 predicts coding information after a prescribed time using a trained prediction model on the basis of coding information in which the coding information of game information and the coding information of player information are combined, and converts the predicted coding information into operation items (accompanied by prediction probabilities) using the trained model.

As described above, in this embodiment, the operations of all players after a prescribed time can be predicted on the basis of game information and player information. Note that the operation prediction unit 321 may predict the operations of all players after a prescribed time on the basis of only game information without using player information. An observer (user) may preset whether to use player information for prediction.

Furthermore, an observer (user) may preset whether to perform operation prediction using the operation prediction unit 321.

The operation prediction method described above is merely an example, and the present disclosure is not limited to this.

The display control unit 322 displays a prediction result on the display unit 340, in addition to the display of a current avatar. The prediction result includes the posture information (coordinate information) of each avatar after a prescribed time and the operation information (including prediction probabilities) of each player after a prescribed time predicted by the operation prediction unit 321, both of which are transmitted from the server 20.

The display control unit 322 displays a predicted posture of each avatar in a display mode different from that of a current avatar, on the basis of information transmitted from the server 20 to display the predicted posture of each avatar in the display mode different from that of the current avatar (e.g., a predicted avatar image R1 shown in Fig. 4). The display control unit 322 can display, in a display mode different from that of a current avatar, the posture having the highest prediction probability among one or more postures predicted by the server 20. Furthermore, the display control unit 322 may display a predicted posture of an avatar such that it at least partially overlaps a current avatar, display the posture near the current avatar (at a position separated by a certain distance), or display the posture at a position included in the predicted posture.

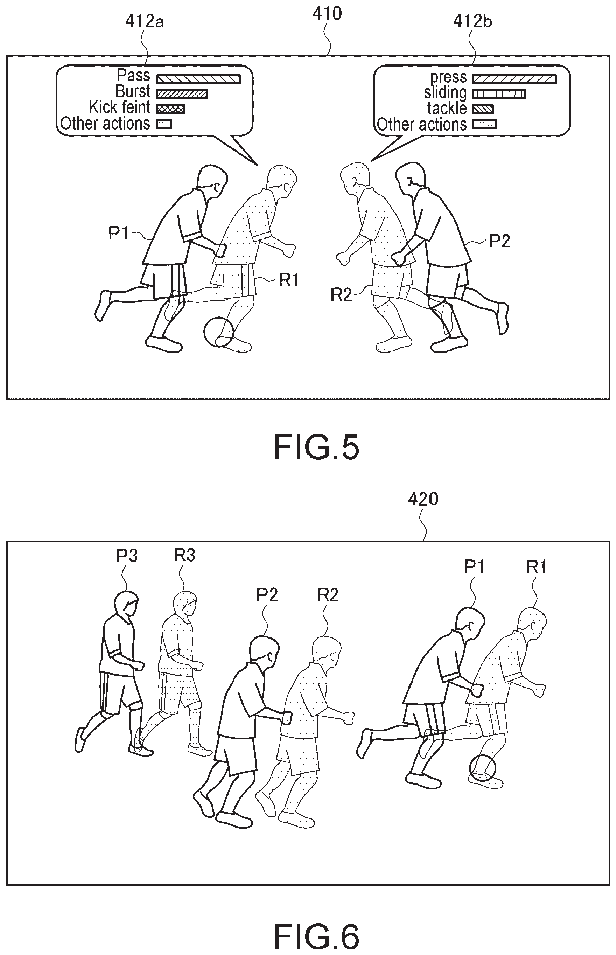

Furthermore, the display control unit 322 displays operation items of each player after a prescribed time, as predicted by the operation prediction unit 321, in association with each avatar (see Figs. 4 and 5). Furthermore, the display control unit 322 may also display predicted operation items together with their prediction probabilities. Furthermore, the display control unit 322 may display predicted operation items in a display mode corresponding to the prediction probabilities. Note that details of an example of the display will be described later with reference to Figs. 4 to 8.

### (Operation Input Unit 330 and Display Unit 340)

The operation input unit 330 receives a user's (observer's) operation input and outputs the input information to the control unit 320. The operation input unit 330 may be implemented by a mouse, a keyboard, a switch, a button, or the like. The display unit 340 displays an image of a game being played in a metaverse. The display unit 340 may be a display panel such as a liquid-crystal display (LCD: Liquid Crystal Display) or an organic EL (Electro Luminescence) display. The display unit 340 may be formed so as to cover, for example, a user's field of view.

The operation input unit 330 and the display unit 340 may be provided separately or integrally. The operation input unit 330 may be a touch sensor laminated on the display unit 340 (e.g., a panel display).

### (Sound Output Unit 350)

For example, when the observer terminal 30 is implemented by an HMD, the sound output unit 350 is configured as headphones worn on the user's head and reproduces an audio signal. The sound output unit 350 is not limited to a headphone type and may be configured as earphones or a bone-conduction speaker.

### (Storage Unit 360)

The storage unit 360 is implemented by a ROM that stores programs, computation parameters, and the like used in the processing of the control unit 320, and a RAM that temporarily stores parameters and the like, which vary as appropriate.

The configuration of the observer terminal 30 has been specifically described above. However, the configuration of the observer terminal 30 according to the present disclosure is not limited to the example shown in Fig. 3. For example, the observer terminal 30 may not necessarily have all the components shown in Fig. 3. Furthermore, the observer terminal 30 may be implemented by a plurality of devices.

### <<2. Display Example>>

Subsequently, a display example of a prediction result in the observer terminal 30 according to this embodiment will be described with reference to Figs. 4 to 8.

### (2-1. Basic Display Example of Prediction Result)

Fig. 4 is a diagram showing a first display example according to this embodiment. In the display example 400 shown in Fig. 4, an avatar image P1 and a predicted avatar image R1 corresponding to a predicted posture (prediction result) of an avatar after a prescribed time are displayed. The predicted avatar image R1 is displayed in a display mode different from that of the avatar image P1. Furthermore, a position at which the predicted avatar image R1 is displayed may be a position included in the predicted posture. For example, the predicted avatar image R1 can be displayed by an avatar's transparent image, an avatar's silhouette image, an avatar's contour image, a skeleton image formed by points representing joint positions and line segments connecting the respective points, or the like. Furthermore, the predicted avatar image R1 may be either a still image or a moving image (animation). Furthermore, the display duration of the predicted avatar image R1 is not particularly limited. For example, the predicted avatar image R1 may be displayed until a next posture prediction is performed, may be displayed until the time corresponding to the prediction (within a prescribed time from the present) is reached, or may be displayed until a specified time such as two or three seconds elapses. The predicted avatar image R1 can be displayed by adapting an avatar (3D model) to an avatar's posture after a prescribed time shown as a prediction result, that is, to each joint position (coordinate information).

Furthermore, the observer terminal 30 may display predicted avatar images of all avatars displayed within an angle of view (within an observer's field of view) of a game image displayed on the display unit 340, or may display predicted avatar images of at least an avatar possessing the ball and avatars around this avatar.

Furthermore, in the display example 400 shown in Fig. 4, an image 401 representing the predicted operation items (prediction result) of the player after a prescribed time is displayed in association with the predicted avatar image R1 of the avatar operated by that player. Furthermore, the prediction probabilities of the operation items are also displayed in the image 401.

### (2-2. Display Example of Operation Prediction Corresponding to The Number of Avatars within Angle of View)

The observer terminal 30 may display an operation prediction (predicted operation items of a player after a prescribed time) when the number of avatars within the angle of view (within an observer's field of view) of a game image displayed on the display unit 340 is equal to or less than a preset number, and may not display the operation prediction when it exceeds the preset number. This can prevent a reduction in the visibility of a display screen due to an increase in the number of display images.

With reference to Figs. 5 and 6, display control of operation predictions corresponding to the number of avatars, for example, when the preset number is "2" will be described. Fig. 5 is a diagram showing a second display example according to this embodiment. In the display example 410 shown in Fig. 5, the number of avatars (avatar images P1 and P2) within the angle of view is equal to or less than the preset number "2." Therefore, operation prediction images 412a and 412b are displayed in association with predicted avatar images R1 and R2, respectively. Note that a method for displaying an operation prediction is not particularly limited. Prediction probabilities may be represented as numerical values as shown in Fig. 4, or may be represented as graphs as shown in Fig. 5. Furthermore, the observer terminal 30 may display operation items with larger characters or more conspicuous colors when they have higher prediction probabilities. Furthermore, the display of operation items is not limited to text. The observer terminal 30 may display, for example, icon images representing operation items.

Fig. 6 is a diagram showing a third display example according to this embodiment. In the display example 420 shown in Fig. 6, the number of avatars (avatar images P1, P2, and P3) within the angle of view exceeds the preset number "2." Therefore, no operation prediction is displayed. In the example shown in Fig. 6, only predicted avatar images R1, R2, and R3 are displayed as prediction results.

### (2-3. Display Example of Operation Prediction According to Approaching Notice Avatar)

The observer terminal 30 may perform control such that, when another avatar is approaching a notice avatar within the angle of view of a game image (within the observer's field of view) displayed on the display unit 340, the number of presentation candidates for an operation prediction corresponding to the other avatar is increased, and such that, when the other avatar is away from the notice avatar, the number of presentation candidates for an operation prediction displayed in association with the other avatar is decreased.

### A notice avatar is, for example, an avatar possessing the ball.

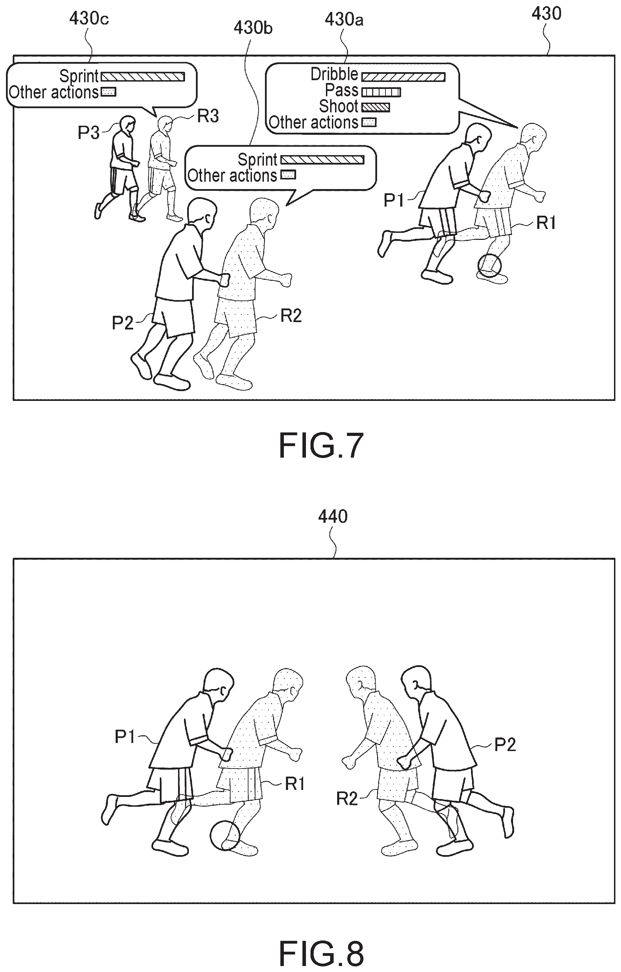

A display example of a case in which another avatar is approaching a notice avatar is shown in Fig. 5. As shown in Fig. 5, in the operation prediction image 412b corresponding to (the predicted avatar image R2 of) the other avatar image P2 approaching the avatar image P1 possessing the ball, the number of presentation candidates is increased to match that of the operation prediction image 412a corresponding to (the predicted avatar image R1 of) the avatar image P1 possessing the ball, and the operation items are presented. On the other hand, a display example of a case in which another avatar is away from a notice avatar will be described with reference to Fig. 7.

Fig. 7 is a diagram showing a fourth display example according to this embodiment. In the display example 430 shown in Fig. 7, in operation prediction images 430b and 430c corresponding to (the predicted avatar images R2 and R3 of) the avatar images P2 and P3 that are a certain distance away from the avatar image P1 possessing the ball, the number of presentation candidates for operation items is decreased compared to the case shown in Fig. 5. Because an avatar that is away from a notice avatar attracts less attention, decreasing the number of presentation candidates for operation items can achieve both the presentation of a prediction result and an improvement in visibility.

Note that a threshold used to determine whether an avatar is approaching or is at a distant location can be preset.

### 2-4. Optional Display Control of Operation Prediction

The display of an operation prediction can be optionally controlled according to an observer's (user's) operation. An observer can collectively or individually control the display of an operation prediction for all avatars.

Fig. 8 is a diagram showing a fifth display example according to this embodiment. The display example 440 shown in Fig. 8 is a screen displayed when the observer performs an operation such that no operation prediction is displayed for the display example 410 shown in Fig. 5. In the example shown in Fig. 8, only the predicted avatar images R1 and R2 corresponding to the avatar images P1 and P2, respectively, are displayed as the display of prediction results.

If an observer's preset profile includes information regarding the observer's support teams or support players, the observer terminal 30 may be automatically set to present predicted operations for the players (avatars) of the support teams or the support plyers (avatars).

Furthermore, when no operation prediction is to be presented, the observer terminal 30 can skip the processing of operation prediction by the operation prediction unit 321 to reduce the calculation amount.

### <<3. Operation Processing>>

Next, the operation processing of this embodiment will be described.

### <3-1. Overall Flow>

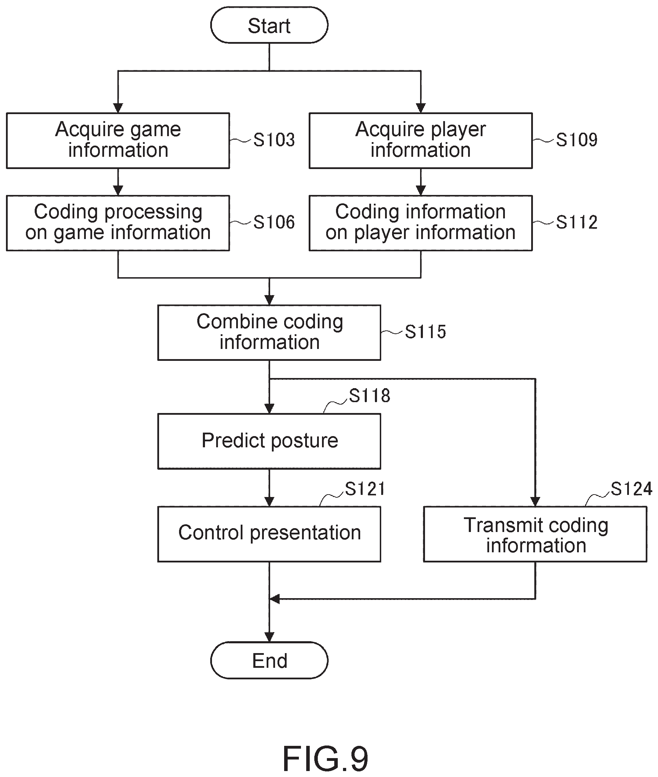

Fig. 9 is a flowchart showing the overall flow of the operation processing of the information processing system 1 according to this embodiment.

As shown in Fig. 9, first, when acquiring game information of a game being held in a metaverse (step S103), the server 20 performs coding processing on the game information (step S106). The game information includes, for example, a posture history of each avatar and an operation history of a player transmitted from the player terminal 10.

Furthermore, when acquiring player information of the game being held in the metaverse (step S109), the server 20 performs coding processing on the player information (step S112). The player information includes, for example, a history of the player's field-of-view images and a sound history.

Next, the server 20 combines the coding information of the game information with the coding information of the player information (step S115).

Then, on the basis of the combined coding information, the server 20 predicts the posture (information (coordinate information) of the joint positions of the entire body) of each avatar after a prescribed time (step S118).

Next, the server 20 controls the display (presentation) of the predicted posture of the avatar in a display mode different from that of the current avatar image (step S121).

Furthermore, the server 20 transmits to the observer terminal 30 the coding information (combined coding information) used for the operation prediction performed in the observer terminal 30 (step S124).

### <3-2. Operation Processing of Observer Terminal 30>

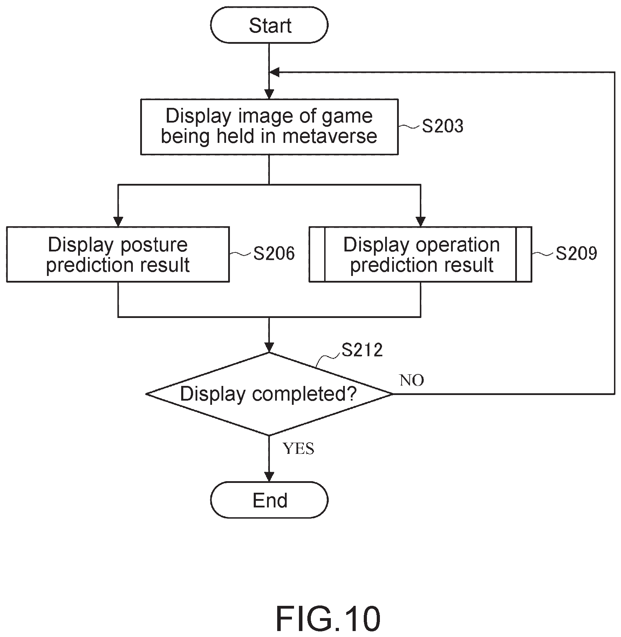

Fig. 10 is a flowchart showing the operation processing of the observer terminal 30 according to this embodiment.

As shown in Fig. 10, first, the observer terminal 30 displays an image of a game being held in a metaverse on the display unit 340 on the basis of information transmitted from the server 20 (S203).

Next, the observer terminal 30 displays a posture prediction result transmitted from the server 20 on the image of the game (step S206). That is, the observer terminal 30 displays, in the image of the game, the posture of a current avatar after a prescribed time by an image in a display mode different from that of the image of the current avatar.

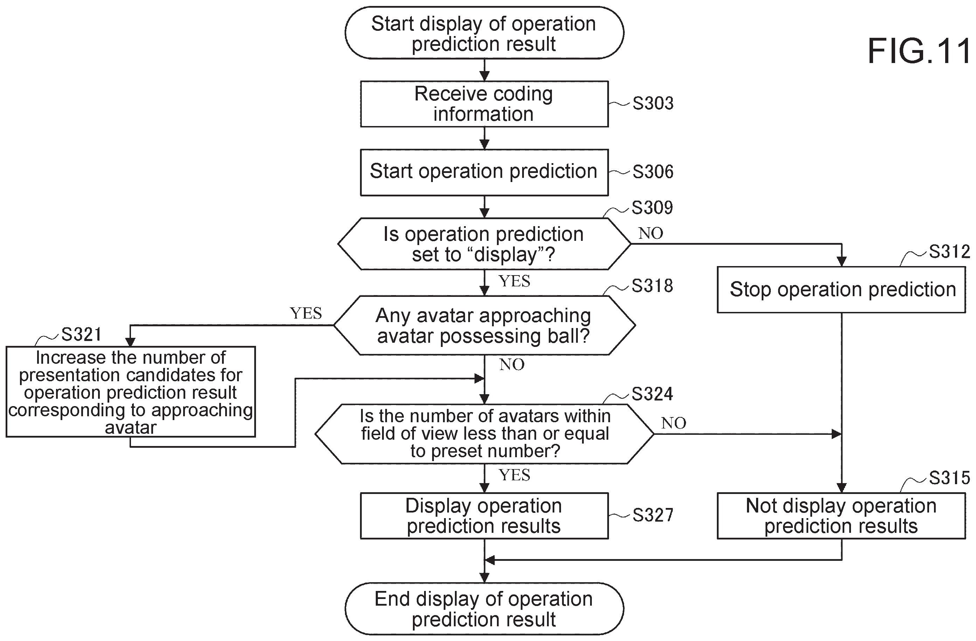

Furthermore, the observer terminal 30 performs an operation prediction on the basis of the coding information of game information and player information transmitted from the server 20, and displays an operation prediction result on the image of the game (step S206). The display processing of the operation prediction result will be described later with reference to Fig. 11.

Then, the observer terminal 30 repeats the above steps S203 to S209 until the display of the image of the game is completed (step S212).

Fig. 11 is a flowchart showing the operation processing of displaying the operation prediction result in step S209 shown in Fig. 10.

As shown in Fig. 11, first, the observer terminal 30 receives the coding information of the game information and the player information from the server 20 (step S303).

Next, the observer terminal 30 starts the processing of an operation prediction based on the coding information (step S306).

Then, the observer terminal 30 confirms the setting as to whether the operation prediction is to be displayed (step S309). This setting can be preset by the observer.

Next, when the operation prediction is set to "Non-display" (No in step S309), the observer terminal 30 stops the processing of the operation prediction (step S312). In this case, the operation prediction result is not displayed (step S315).

On the other hand, when the operation prediction is set to "Display" (Yes in step S309), the observer terminal 30 confirms whether any avatar is approaching the avatar possessing the ball (step S318). Note that the observer terminal 30 may determine whether another avatar is approaching the avatar possessing the ball on the basis of whether the Euclidean distance between the avatar possessing the ball and the other avatar, which is calculated from the position (coordinate information) of the waist of each avatar, exceeds a prescribed threshold.

When there is an approaching avatar (Yes in step S318), the observer terminal 30 increases the number of presentation candidates for the operation prediction result corresponding to the approaching avatar (step S321). This embodiment assumes a case in which the number of presentation candidates for the operation prediction result corresponding to an avatar other than the avatar possessing the ball is preset to a smaller number.

Subsequently, when there is no approaching avatar (No in step S318), or after increasing the number of presentation candidates for the operation prediction result corresponding to the approaching avatar (step S321), the observer terminal 30 confirms whether the number of avatars within the observer's field of view (within the field of view of the game image displayed on the display unit 340) is smaller than a preset number (step S324).

When the number of avatars is equal to or less than the preset number (Yes in step S324), the observer terminal 30 displays the operation prediction results corresponding to all avatars within the field of view of the game image displayed on the display unit 340 (step S327).

On the other hand, when the number of avatars is greater than the preset number (No in step S324), the observer terminal 30 does not display the operation prediction results corresponding to all avatars within the field of view of the game image displayed on the display unit 340 (step S315). Note that even when the number of avatars within the field of view of the game image is greater than the preset number, the observer terminal 30 may display only the operation prediction result corresponding to the avatar possessing the ball. Furthermore, the observer terminal 30 may display the operation prediction result corresponding to the avatar possessing the ball in key moments of the game, such as set pieces, goal-area plays, or plays in which other avatars approach the avatar possessing the ball.

### <4. Modified Examples>

Subsequently, modified examples of this embodiment will be described.

### <<4-1. First Modified Example>>

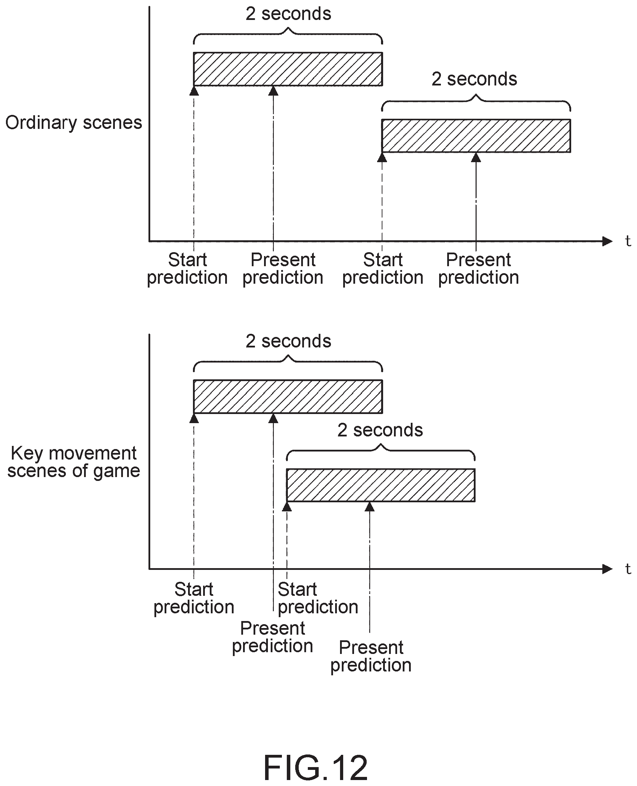

Fig. 12 is a diagram illustrating prediction timings according to a first modified example of this embodiment. The upper row in Fig. 12 shows prediction timings in ordinary scenes (i.e., scenes other than key moment scenes in the game). As shown in the upper row in Fig. 12, in ordinary scenes, the observer terminal 30 performs predictions at timings at which the predictions do not overlap each other.

The lower row in Fig. 12 shows prediction timings in key moment scenes of the game. The key moment scenes refer, for example, to scenes of set pieces, goal-area plays, and plays in which other avatars approach an avatar possessing the ball. In the key moment scenes, the observer terminal 30 may increase the update frequency of predictions. That is, the observer terminal 30 may perform predictions at timings at which the predictions overlap each other. Furthermore, in the key moment scenes, the observer terminal 30 may increase the number of presentation candidates for the prediction operation corresponding to an avatar possessing the ball.

### <<4-2. Second Modified Example>>

The embodiment described above explains that the operation prediction is performed by the observer terminal 30. However, the present disclosure is not limited thereto, and the operation prediction may alternatively be performed by the server 20. In this case, the server 20 can transmit the operation prediction result to the observer terminal 30.

### <<4-3. Third Modified Example>>

The embodiment described above explains that the posture prediction unit 224 predicts an avatar's posture after a prescribed time, and that the operation prediction unit 321 predicts a player's operation after a prescribed time. However, such a "prescribed time" can be dynamically changed.

For example, the posture prediction unit 224 or the operation prediction unit 321 may perform predictions after a preset prescribed time as appropriate according to game situations. The game situations include the game time (elapsed time since the start of the game or remaining time until the end of the game), key moments of the game, or the like. For example, in key moments of the game, such as set pieces, goal-area plays, plays in which other avatars approach the avatar possessing the ball, or plays in which avatars on the same team as the avatar possessing the ball are waiting for a pass near the goal, the posture prediction unit 224 or the operation prediction unit 321 may shorten the "prescribed time" for predictions compared to that used in ordinary moments. On the other hand, in non-key moments, such as when no other avatars are present around the avatar possessing the ball, the "prescribed time" for predictions may be lengthened compared to than that used in ordinary moments.

Furthermore, the posture prediction unit 224 or the operation prediction unit 321 may perform predictions after a preset prescribed time according to avatars or teams. For example, in the case of fast-paced teams or their combinations, the posture prediction unit 224 or the operation prediction unit 321 may shorten the "prescribed time" for predictions compared to that used in ordinary moments. Furthermore, for specific avatars corresponding to players or positions leading the game, the posture prediction unit 224 or the operation prediction unit 321 may shorten the "prescribed time" for predictions compared to that used for other avatars. In addition, when the specific avatars described above possess the ball, or when the ball comes within a certain distance of the specific avatars, the posture prediction unit 224 or the operation prediction unit 321 may shorten the "prescribed time" in the posture predictions or operation predictions of the avatars compared to that used in ordinary moments.

### <<4-4. Fourth Modified Example>>

The embodiment described above explains that the posture prediction unit 224 outputs, as a prediction result, the posture having the highest prediction probability among one or more predicted postures, and that the display control unit 322 displays the posture having the highest prediction probability in a display mode different from that of a current avatar. However, the present disclosure is not limited thereto. For example, the posture prediction unit 224 may output a specific posture as a prediction result when the preset specific posture exceeds a prescribed prediction probability, and the display control unit 322 may display only the specific posture. Examples of the specific posture include a shooting posture (motion). Note that a plurality of specific postures may be set. Furthermore, the specific posture may be set for each observer terminal 30. In this case, the posture prediction unit 224 outputs one or more predicted postures and their prediction probabilities as a prediction result, and the prediction result is transmitted from the server 20 to the observer terminal 30. Then, when the preset specific posture among the one or more predicted postures exceeds a prescribed prediction probability, the display control unit 322 displays only the specific posture.

Furthermore, the posture prediction unit 224 may change a "prescribed time" for a prediction according to the type of a specific posture preset as a display target. Furthermore, the posture prediction unit 224 may change a "prescribed time" for a prediction according to the type of a specific posture and game situations. For example, when a specific posture serving as a display target is a shooting motion and no avatar is present around a ball-possessing avatar, the posture prediction unit 224 can lengthen the "prescribed time" and predict a ball-possessing avatar's shooting motion at an early stage when the ball-possessing avatar approaches the goal. At this time, the display control unit 322 may continuously display a predicted avatar image showing the predicted avatar's posture near the current avatar. On the other hand, when many avatars of the opponent team are present around the ball-possessing avatar, the shooting motion is predicted at a prescribed prediction probability or higher as soon as the ball-possessing avatar approaches the goal. Therefore, the posture prediction unit 224 may shorten the "prescribed time."

### <5. Supplemental>

The preferred embodiments of the present disclosure have been described in detail with reference to the accompanying drawings, but the present technology is not limited to such examples. It is evident that persons having ordinary knowledge in the field of the present disclosure could conceive various modified or corrected examples within the scope of the technical idea described in the claims, and it is understood that these also fall within the technical scope of the present disclosure as a matter of course.

For example, one or more computer programs that cause hardware such as a CPU, a ROM, and a RAM included in the server 20 or the observer terminal 30 described above to perform the functions of the server 20 or the observer terminal 30 can also be created. Furthermore, a computer-readable recording medium storing the one or more computer program is also provided.

Furthermore, the effects described in the present specification are provided merely for explanation or illustration and are not intended to limit the specification. That is, the technology related to the present disclosure can produce, in addition to or instead of the above effects, other effects that becomes obvious to persons skilled in the art from the description of the present specification.

Note that the present technology may also employ the following configurations.
(1) An information processing device, including:
   a control unit that performs
   processing to predict a posture of an object after a prescribed time on the basis of game information including at least a motion history of the object operated by a player, and
   processing to display the predicted posture of the object in a display mode different from that of a current image of the object.
(2) The information processing device according to (1), in which
   the motion history of the object includes at least one of a posture history of the object or an operation history of the player operating the object.
(3) The information processing device according to (1) or (2), in which
   the game information further includes information regarding a position of a ball used in a game.
(4) The information processing device according to any one of (1) to (3), in which
   the control unit predicts postures of all objects after a prescribed time on the basis of game information including at least motion histories of all the objects in the game.
(5) The information processing device according to any one of (1) to (4), in which
   the control unit extracts a feature amount of a motion of the object in the game from the game information, and predicts the posture of the object after the prescribed time using a trained prediction model.
(6) The information processing device according to (5), in which
   the control unit calculates, as a prediction of the posture of the object after the prescribed time, joint positions of an entire body of the object after the prescribed time.
(7) The information processing device according to any one of (1) to (6), in which
   the control unit predicts the posture of the object after the prescribed time on the basis of the game information and player information regarding the player.
(8) The information processing device according to (7), in which
   the player information includes at least one of a history of a field-of-view image of the player or a sound history in the game.
(9) The information processing device according to (8), in which
   motions of other objects present around the object are obtained from the history of the field-of-view image of the player, and
   speech sounds of other players are obtained from the sound history.
(10) The information processing device according to any one of (7) to (9), in which
   the control unit predicts the posture of the object after the prescribed time using a trained prediction model, on the basis of a feature amount of a motion of the object in the game extracted from the game information and a feature amount of surrounding information regarding the object in the game extracted from the player information.
(11) The information processing device according to any one of (1) to (10), in which
   the control unit transmits information for displaying the predicted posture of the object in the display mode different from that of the current image of the object to a user terminal.
(12) The information processing device according to (11), in which
   the control unit transmits the game information for predicting an operation of the player on the user terminal after a prescribed time to the user terminal.
(13) The information processing device according to any one of (1) to (11), in which
   the control unit further predicts an operation of the player on the object after a prescribed time on the basis of the game information, and
   displays an item of the predicted operation of the player in association with the object.
(14) The information processing device according to (13), in which
   the control unit displays items of one or more predicted operations of the player together with prediction probabilities.
(15) The information processing device according to (13) or (14), in which
   the control unit displays items of one or more predicted operations of the player in a display mode corresponding to prediction probabilities.
(16) The information processing device according to any one of (13) to (15), in which
   the control unit transmits information for displaying the item of the predicted operation of the player in association with the object to a user terminal.
(17) The information processing device according to any one of (1) to (16), in which
   the control unit dynamically changes the prescribed time.
(18) An information processing method, including:
   predicting, by a processor, a posture of an object after a prescribed time on the basis of game information including at least a motion history of the object operated by a player; and
   displaying, by the processor, the predicted posture of the object in a display mode different from that of a current image of the object.
(19) A program causing a computer to function as a control unit that displays a posture of an object after a prescribed time, which is predicted on the basis of game information including at least a motion history of the object operated by a player, in a display mode different from that of a current image of the object.
(20) The program according to (19), in which
   the control unit determines whether to display an item of an operation of the player on the object after a prescribed time, which is predicted on the basis of the game information, in accordance with a state of each object in a user's field-of-view image in a virtual space when displaying the item in association with the object.

### Reference Signs List

- 1: information processing system
- 10: player terminal
- 20: server
- 210: communication unit
- 220: control unit
- 221: game information coding unit
- 222: player information coding unit
- 223: coding information boding unit
- 224: posture prediction unit
- 225: presentation control unit
- 226: coding-information transmission control unit
- 230: storage unit
- 30: observer terminal
- 310: communication unit
- 320: control unit
- 321: operation prediction unit
- 322: display control unit
- 330: operation input unit
- 340: display unit
- 350: sound output unit
- 360: storage unit
- 40: network

## Claims

1. An information processing device, comprising:
a control unit that performs
processing to predict a posture of an object after a prescribed time on a basis of game information including at least a motion history of the object operated by a player, and
processing to display the predicted posture of the object in a display mode different from that of a current image of the object.

2. The information processing device according to claim 1, wherein
the motion history of the object includes at least one of a posture history of the object or an operation history of the player operating the object.

3. The information processing device according to claim 1, wherein
the game information further includes information regarding a position of a ball used in a game.

4. The information processing device according to claim 1, wherein
the control unit predicts postures of all objects after a prescribed time on a basis of game information including at least motion histories of all the objects in a game.

5. The information processing device according to claim 1, wherein
the control unit extracts a feature amount of a motion of the object in a game from the game information, and predicts the posture of the object after the prescribed time using a trained prediction model.

6. The information processing device according to claim 5, wherein
the control unit calculates, as a prediction of the posture of the object after the prescribed time, joint positions of an entire body of the object after the prescribed time.

7. The information processing device according to claim 1, wherein
the control unit predicts the posture of the object after the prescribed time on a basis of the game information and player information regarding the player.

8. The information processing device according to claim 7, wherein
the player information includes at least one of a history of a field-of-view image of the player or a sound history in a game.

9. The information processing device according to claim 8, wherein
motions of other objects present around the object are obtained from the history of the field-of-view image of the player, and
speech sounds of other players are obtained from the sound history.

10. The information processing device according to claim 7, wherein
the control unit predicts the posture of the object after the prescribed time using a trained prediction model, on a basis of a feature amount of a motion of the object in a game extracted from the game information and a feature amount of surrounding information regarding the object in the game extracted from the player information.

11. The information processing device according to claim 1, wherein
the control unit transmits information for displaying the predicted posture of the object in the display mode different from that of the current image of the object to a user terminal.

12. The information processing device according to claim 11, wherein
the control unit transmits the game information for predicting an operation of the player on the user terminal after a prescribed time to the user terminal.

13. The information processing device according to claim 1, wherein
the control unit further predicts an operation of the player on the object after a prescribed time on a basis of the game information, and
displays an item of the predicted operation of the player in association with the object.

14. The information processing device according to claim 13, wherein
the control unit displays items of one or more predicted operations of the player together with prediction probabilities.

15. The information processing device according to claim 13, wherein
the control unit displays items of one or more predicted operations of the player in a display mode corresponding to prediction probabilities.

16. The information processing device according to claim 13, wherein
the control unit transmits information for displaying the item of the predicted operation of the player in association with the object to a user terminal.

17. The information processing device according to claim 1, wherein
the control unit dynamically changes the prescribed time.

18. An information processing method, comprising:
predicting, by a processor, a posture of an object after a prescribed time on a basis of game information including at least a motion history of the object operated by a player; and
displaying, by the processor, the predicted posture of the object in a display mode different from that of a current image of the object.

19. A program causing a computer to function as a control unit that displays a posture of an object after a prescribed time, which is predicted on a basis of game information including at least a motion history of the object operated by a player, in a display mode different from that of a current image of the object.

20. The program according to claim 19, wherein
the control unit determines whether to display an item of an operation of the player on the object after a prescribed time, which is predicted on a basis of the game information, in accordance with a state of each object in a user's field-of-view image in a virtual space when displaying the item in association with the object.
